# EUROPEAN PATENT APPLICATION

(11) **EP 2 706 296 A2**
(43) Date of publication of application: **12.03.2014**
(21) Application number: 13184015.9
(22) Date of filing: 11.09.2013
(51) Int. Cl.: F23G 5/46, F23G 5/00, F23G 5/02

(54) **A pyrolysis assembly and method for harnessing energy from waste materials**

(30) Priority: 11.09.2012 GB 201216194
(71) Applicant: VT Innovations Limited, Belfast Antrim BT1 5BN (GB)
(72) Inventor: Finnin, Gerard, County Limerick (IE)
(74) Representative: Litton, Rory Francis

(57) **Abstract**

The present invention is directed towards an apparatus and method for harnessing energy from waste materials (102) using a pyrolysis assembly, whereby the pyrolysis assembly comprises a pre-pyrolysis treatment plant (104), a pyrolysis plant (120), and, a fuel-based energy plant(136). Waste materials having at least 30% biomass by weight are fed into the pre-pyrolysis treatment plant and the biomass is separated from the waste materials in the pre-pyrolysis treatment plant. The biomass is chemically cracked into at least a char and a gas in the pyrolysis plant and this char and gas is used by the fuel-based energy plant to harness energy from the waste materials. Problems associated with the efficiency of pre-pyrolysis treatment plants and safety of the parts used in the pre-pyrolysis treatment plants is addressed in the current invention

## Description

### Introduction

This invention relates to harnessing energy from waste materials containing biomass. In particular, the present invention primarily relates to a method and apparatus which is suitable for passing waste materials, including biomass, through a pyrolysis system to harness energy from the waste materials. The invention is also directed towards a pre-pyrolysis waste materials treatment method and apparatus assembly.

Throughout this specification, the term "waste material" shall be understood to encompass any type of mixed waste material which comprises at least 30% biomass by dry weight.

The disposal of waste materials is a problem in many jurisdictions. Landfill sites have traditionally been used to receive and bury waste materials over the years. However, there are two significant problems with such landfill sites which has been increasingly coming to light in recent times. Firstly the detrimental environmental impact is relatively high as the waste materials are oftentimes simply buried with little or no treatment being applied to them and as such the waste material will degrade and decompose over time which can cause environmental issues as unwanted substances are released into the environment. In most countries, the public have moved towards recycling of waste as opposed to simply dumping waste in landfill sites. Refuse companies and governmental refuse departments are continually looking for improved ways of dealing with the waste materials in an environmentally conscientious manner.

Secondly, the waste materials are known to contain energy which could be harnessed by using the waste as a fuel, and the extraction of this energy has become attractive in light of increasing fuel costs in other sectors. Basic combustion of waste in incineration plants has heretofore been primarily used as the means to extract energy from the waste, however the combustion process is inefficient and poses its own environmental issues. Pyrolysis is known to be a more effective means of extracting the energy from waste materials, and in particular biomass. The biomass is chemically cracked, in the absence of oxygen. As a consequence, the biomass is broken down into predominately gases and char. Both the gases and the char can be used as fuels to generate energy using cyclonic combustion furnaces and internal combustion engines respectively. It is known form the prior art to use pyrolysis on biomass waste in order to harness energy from the biomass waste. There are problems associated with the known pyrolysis techniques. In particular, the continuous supply of conditioned biomass material, of sufficient calorific value, can be difficult to achieve using waste materials of varying and inconsistent waste content. Oftentimes, the waste material needs to be treated prior to the pyrolysis process to remove unwanted non-biomass waste and condition the biomass for effective pyrolysis. This pre-pyrolysis treatment step is highly important in achieving an effective pyrolysis system.

Prior art pre-pyrolysis treatment systems use a variety of different systems; one of which is pressurised steam within a rotating drum to breakdown the biomass material within the waste materials and separate the biomass material from the other non-biomass waste materials. These prior art rotating drums operate at low pressures of less than 1 Bar, or at higher pressures up to 8 Bar which utilise wet steam cycles to treat the biomass. The problems with these prior art systems is that the removal of the contaminated steam from the biomass at the termination of the treatment process is difficult and the energy required to generate steam is expensive. The extraction of the steam is an important step in providing dry conditioned biomass for pyrolysis. However, during evacuation of the steam from the rotating drum, there is so called carryover of biomass and other non-biomass waste within the steam, and this carryover waste can block the extraction outlets resulting in a very wet product. This also causes the rotating drum to become inoperable, and the waste materials blocking the steam extraction outlets need to be manually removed. Having to deactivate the rotating drum and manually remove the waste blocking the extraction outlets reduces the operational running time of the rotating drum and hence reduces the overall efficiency of the pyrolysis system. The need to manually clean out the treatment drum also increases the running cost of operating the pyrolysis system. There is also a safety issue as the drum will not depressurise fully causing danger when opening the drum.

PCT Patent Publication Number WO2007/037768 A1 (GEP YESIL ENERJI URETIM TEKNLOJILERI LIMITEDMSIRKETI) discloses a pyrolysis assembly. The solid waste from the municipal waste collection is screened and, after shredding where necessary, and pre-treatment drying where necessary, the waste undergoes pyrolysis treatment. The gas and coke from the treatment are then used to create energy and are used in the pyrolysis process itself. However, the system disclosed in WO2007/037768 suffers from many of the problems mentioned hereinbefore.

U.K. Patent Publication Number GB 2,471,462 A (SWEENEY et al.) discloses a general pyrolysis process which is used to generate electrical power. The process is incorporated within a system that uses an airless drier for drying combustible waste material. The airless drier produces a pyrolysis feedstock in this pre-pyrolysis treatment process. GB 2,471,462 discloses a pyrolysis system produces char and a gas from the pyrolysis feedstock. A gasifier is then used to create syngas from the char, and an oxidiser is used to oxidise the syngas with the gas in the presence of air to produce thermal energy. The thermal energy is used to generate electrical power from a conventional turbine. GB 2,471,462 discloses the use of a supply belt for feeding a pre-treatment separation unit which separates the waste suitable for pyrolysis from other waste materials such as metal, glass and the like. GB 2,471,462 also discloses the use of an enclosed belt for the pyrolysis feedstock for pyrolysis in an oxygen-free atmosphere. The process described in GB 2,471,462 also suffers from many of the problems mentioned above.

PCT Patent Publication Number WO2006/117824 A1 (PYROLB S.r.I.) discloses a pyrolysis process. The pyrolysis process of WO2006/117824 is a process for treating solid waste treatment, and particularly municipal solid waste, with recovery of thermal energy from the waste. The pyrolysis process of WO2006/117824 has been modified in order to improve the energy yield and to reduce the quantity of unusable solid residues which have to be sent to the waste disposal. The process and relative plant include a boosted treatment of the incoming waste, with a preliminary separation into three solid fractions. At least one of the separated solid fraction is subjected to a preliminary drying step prior to the pyrolysis. The process and relative plant also include a section for recovering energy from the pyrolysis coke, wherein the latter is subjected to a thermochemical treatment with the production of a further quantity of synthesis gas. As with the other prior art documents cited hereinabove, WO2006/117824 suffers the problems associated with currently known pre-pyrolysis treatment techniques.

It is a goal of the present invention to provide a method and assembly for pyrolysis of waste materials, and particularly a pre-pyrolysis treatment plant and method, that overcomes at least one of the above mentioned problems.

### Summary of the Invention

The present invention is directed to a pyrolysis assembly comprising a pre-pyrolysis treatment plant, a pyrolysis plant, a fuel-based energy plant, and, a recycling plant, wherein, the pyrolysis assembly is fed waste materials having at least 30% biomass by weight, and the pre-pyrolysis treatment plant separates the biomass from the waste materials and conditions the separated biomass for the pyrolysis plant; the conditioned biomass is fed to the pyrolysis plant which causes the conditioned biomass to breakdown into at least a char and a gas; the char and gas are passed into the fuel-based energy plant where the char and gas are used as fuels to harness energy from the char and gas; the harnessed energy is used to operate the pyrolysis assembly and excess energy is exported; and, by-products from the fuel-based energy plant and the pyrolysis plant are recovered for re-use by the recycling plant.

The advantage of providing the pyrolysis system as detailed above is that energy can be effectively harnessed from biomass.

In a further embodiment, the pre-pyrolysis treatment plant comprises a rotating treatment drum and a buffer vessel connected to the rotating treatment drum, such that, steam charged into the rotating treatment drum and evacuated from the drum is passed through the buffer vessel.

The advantage of using a buffer vessel is that biomass materials carried over by contaminated steam during evacuation of the contaminated steam from the rotating treatment drum does not clog the rotating treatment drum itself. The biomass materials carried over by contaminated steam is held in the buffer vessel.

The present invention is directed to a pyrolysis assembly comprising a pre-pyrolysis treatment plant, a pyrolysis plant, a fuel-based energy plant, and, a recycling plant, wherein, the pyrolysis assembly is fed waste materials having at least 30% biomass by weight, and the pre-pyrolysis treatment plant separates the biomass from the waste materials and conditions the separated biomass for the pyrolysis plant; the conditioned biomass is fed to the pyrolysis plant which causes the conditioned biomass to crack into at least a char and a gas; the char and gas are passed into the fuel-based energy plant where the char and gas are used as fuels to harness energy from the char and gas; the harnessed energy is used to operate the pyrolysis assembly and excess energy is exported; and, by-products from the fuel-based energy plant and the pyrolysis plant are recovered for re-use by the recycling plant; whereby, the pre-pyrolysis treatment plant comprises a rotating treatment drum and a buffer vessel connected to the rotating treatment drum, such that, steam charged into the rotating treatment drum and evacuated from the drum is passed through the buffer vessel.

As above, the advantage of using a buffer vessel is that biomass materials carried over by contaminated steam during evacuation of the contaminated steam from the rotating treatment drum do not clog the rotating treatment drum. The biomass materials carried over by contaminated steam will be held and contained within in the buffer vessel.

In a further embodiment, the buffer vessel comprises a strainer within the buffer vessel. The strainer assists in preventing ports, inlets and outlets on the buffer vessel from becoming clogged and consequently inoperable.

In a further embodiment, the rotating treatment drum comprises an access door having a safety mechanism to prevent the access door being opened whilst the rotating treatment drum is pressurised above standard room-pressure.

In a further embodiment, the safety mechanism comprises an interlocking mechanism to compare the pressure inside the rotating treatment drum to the pressure external the rotating treatment drum so as prevent the access door being opened whilst the rotating treatment drum is pressurised above standard room-pressure. Preferably, the interlocking mechanism is electrical or electronic. This is seen to be an important safety feature of the present invention.

In a further embodiment, the safety mechanism comprises a mechanical interlocking mechanism having a spring loaded locking pin which is spring biased to move to an unlocking position when the pressure inside the rotating treatment drum is substantially equal to the pressure external the rotating treatment drum.

In a further embodiment, the pre-pyrolysis treatment plant comprises a two-stage compression screw to compress and dry the biomass for feeding to the pyrolysis plant. Thus, a consistent and constant supply of appropriately dried biomass can be regulated for feeding to the pyrolysis plant.

The present invention is further directed towards a method of harnessing energy from waste materials using a pyrolysis assembly, whereby the pyrolysis assembly comprises a pre-pyrolysis treatment plant, a pyrolysis plant, a fuel-based energy plant, and, a recycling plant; the method comprising the steps of: feeding waste materials having at least 30% biomass by weight into the pre-pyrolysis treatment plant; separating the biomass from the waste materials in the pre-pyrolysis treatment plant; chemically cracking the biomass into at least a char and a gas in the pyrolysis plant; harnessing energy from the char and gas in the fuel-based energy plant; whereby, the step of separating the biomass from the waste materials in the pre-pyrolysis treatment plant comprises feeding the waste materials into a rotating treatment drum to separate the biomass from the waste materials; with a buffer vessel being connected to the rotating treatment drum, such that, steam charged into the rotating treatment drum and evacuated from the drum is passed through the buffer vessel.

Again, the advantage of using a buffer vessel is that biomass materials carried over by contaminated steam during evacuation of the contaminated steam from the rotating treatment drum do not clog the rotating treatment drum. The biomass materials carried over by contaminated steam will be held and contained within in the buffer vessel.

In a further embodiment, the method comprises the step of conditioning the separated biomass for the pyrolysis plant prior to feeding the conditioned biomass into the pyrolysis plant to be chemically cracked.

In a further embodiment, the method comprises the step of using the harnessed energy to operate the pyrolysis assembly and exporting excess energy

In a further embodiment, the method comprises the step of recovering by-products from the fuel-based energy plant and the pyrolysis plant for re-use by the recycling plant.

The present invention is further directed towards a buffer vessel suitable for connection to a rotating treatment drum, with the buffer vessel and rotating treatment drum forming part of a pre-pyrolysis treatment plant in a pyrolysis assembly; the pre-pyrolysis treatment plant being used to separate biomass from waste materials having at least 30% biomass by weight; whereby, biomass is separated from the waste materials in the rotating treatment drum by pressurising the rotating treatment drum with steam prior to rotating the waste materials for a predetermined period of time, **characterised in that**, steam charged into the rotating treatment drum and evacuated from the drum is passed through the buffer vessel.

As before, the advantage of using a buffer vessel is that biomass materials carried over by contaminated steam during evacuation of the contaminated steam from the rotating treatment drum do not clog the rotating treatment drum. The biomass materials carried over by contaminated steam will be held and contained within in the buffer vessel.

In a further embodiment, the buffer vessel comprises a clean steam inlet to receive clean steam from a steam source and a clean steam outlet connected to the rotating treatment drum so as to charge the rotating treatment drum with steam; and the buffer vessel also comprises a contaminated steam inlet connected to the rotating treatment drum so as to evacuate steam from the drum and a contaminated steam outlet is discharge contaminated steam from the buffer vessel.

In a further embodiment, the buffer vessel comprises a cleaning port at one end of the vessel to allow access to an interior of the buffer vessel for cleaning of contaminants out of the vessel; and the buffer vessel comprises a strainer within the buffer vessel with the strainer dividing the clean steam inlet and the contaminated steam outlet from the clean steam outlet and the contaminated steam inlet.

The present invention is further directed towards a two-stage compression screw for use in a pyrolysis plant, the two-stage compression screw being used to compress and dry biomass for feeding to the pyrolysis plant. Preferably, the two-stage compression screw is temperature controlled to create a substantially oxygen-free dried biomass feed for the pyrolysis plant.

The present invention is further directed towards a rotating treatment drum suitable for use in a pre-pyrolysis treatment unit, the rotating treatment drum comprising an access door having a safety mechanism to prevent the access door being opened whilst the rotating treatment drum is pressurised above standard room-pressure.

In a further embodiment, the safety mechanism comprises an interlocking mechanism to compare the pressure inside the rotating treatment drum to the pressure external the rotating treatment drum so as prevent the access door being opened whilst the rotating treatment drum is pressurised above standard room-pressure.

In a further embodiment, the safety mechanism comprises an electrical interlocking mechanism to compare the pressure inside the rotating treatment drum to the pressure external the rotating treatment drum so as prevent the access door being opened whilst the rotating treatment drum is pressurised above standard room-pressure.

In a further embodiment, the safety mechanism comprises a mechanical interlocking mechanism having a spring loaded locking pin which is spring biased to move to an unlocking position when the pressure inside the rotating treatment drum is substantially equal to the pressure external the rotating treatment drum.

### Detailed Description of Embodiments

The invention will be more clearly understood from the following description of some embodiments thereof, given by way of example only, with reference to the accompanying drawings, in which:
Figure 1 is a flow diagram of a pyrolysis method used in accordance with the present invention;
Figure 2 is a top view of a buffer vessel, showing an internal strainer in phantom lining, used in a pyrolysis assembly which carries out the pyrolysis method of Figure 1;
Figure 3 is a cross-sectional view, along A-A', of the buffer vessel of Figure 2;
Figure 4 is a cross sectional view of a rotating treatment drum used in the pyrolysis method of Figure 1;
Figure 5 is a detail cross-sectional view of an access door on the rotating treatment drum of Figure 4; and,
Figure 6 is a detail cross-sectional side view of a two-stage compression screw system used in the pyrolysis assembly which carries out the pyrolysis method of Figure 1.

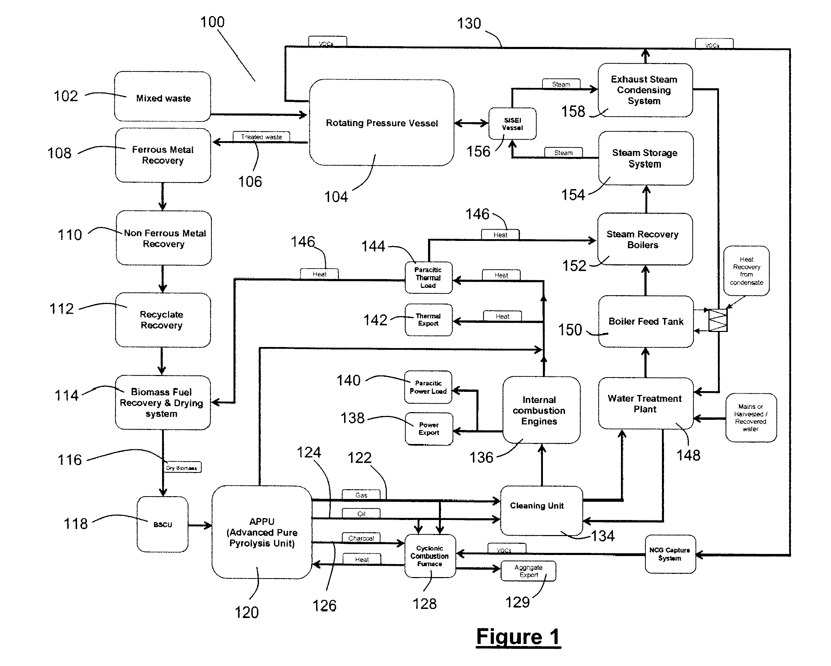

Referring to Figure 1, there is shown a flow diagram detailing a pyrolysis method of treating and conditioning biomass to create fuel for harnessing energy from the biomass, the pyrolysis method being indicated generally by reference numeral 100.

It will be generally understood from the pyrolysis method 100 described hereinbelow with reference to the Figures, how to construct a corresponding pyrolysis assembly so as to implement out the pyrolysis method 100.

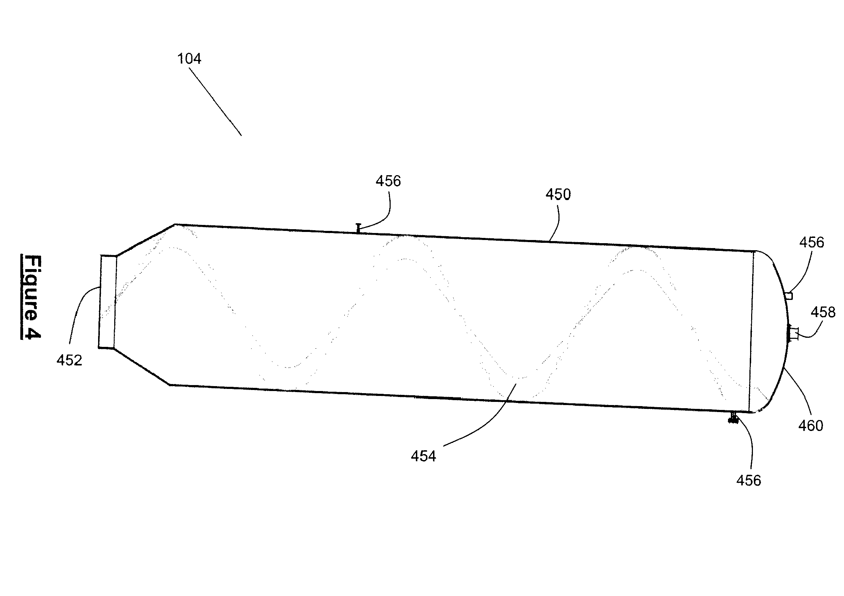

As part of the pyrolysis method 100, mixed waste materials 102, comprising at least 30% biomass, are fed into a rotating treatment drum 104. The rotating treatment drum 104 is described in greater detail with reference to Figure 4, but essentially carries out a pre-pyrolysis treatment of the waste materials 102 in the rotating treatment drum 104 by rotating the waste materials in a pressurised steam environment so that the biomass held in the waste materials 102 is detached from non-biomass materials in the waste materials 102, and the biomass materials are conditioned for effective pyrolysis. At this stage the treated material 106 contains biomass which is still loosely mixed with non-biomass materials, however the biomass has been detached form non-biomass materials in the treated material 106 for separation as described further hereinbelow.

The treated material 106 is discharged from the rotating treatment drum 104 and passes through a ferrous metal recovery step 108, a non-ferrous metal recovery step 110, and a recyclate recovery step 112 to remove all non-biomass materials from the feed line. The remaining biomass in the feed line is fed into a biomass fuel recovery and drying system 114 to produce dry conditioned biomass 116.

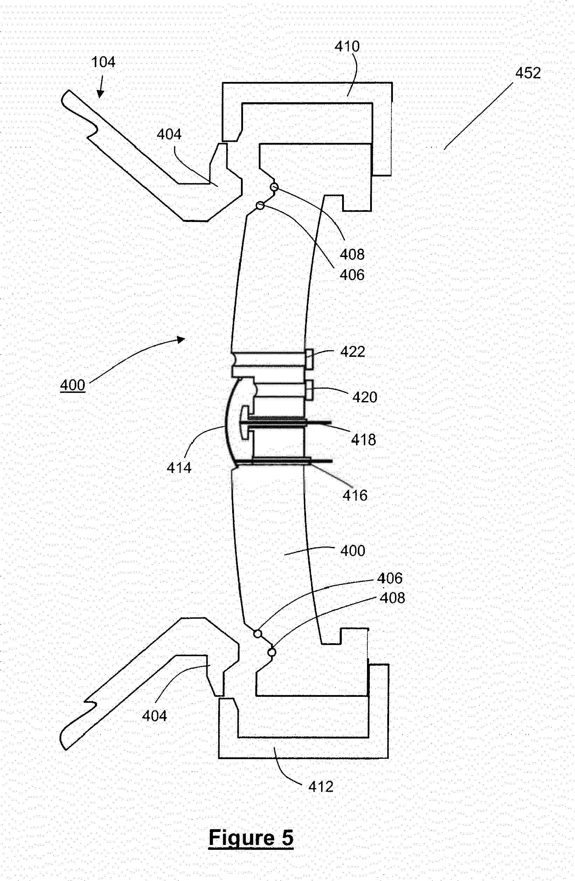

The dry conditioned biomass 116 is propelled further along the assembly using a two-stage compression screw system 118, as detailed with respect to Figure 5 further below, and the dry biomass waste is fed into an advanced pure pyrolysis unit 120.

Within the advanced pure pyrolysis unit 120, the biomass chemically cracks, as it is held in a substantially oxygen-free and high temperature environment. The biomass cracks into hydrogen, carbon monoxide, methane, condensable double organic compounds, water vapour and solid carbonaceous char. The gases 122 and the condensable double organic compounds, as oils 124, are feed into a cleaning unit 134, such as a simple water-based drenching unit.

The char 126 is feed as a fuel into a cyclonic combustion furnace 128 where it is mixed with air at a high temperature, such as volatile organic compounds 130 emanating form the rotating drum 104; and, the high temperature air oxidises the char to produce a flue gas at a temperature in the range of 800°C and 1300°C. Ash from the cyclonic combustion furnace 128 is quenched using water and forms a glassy aggregate 129. The flue gases in the range of 900°C and 1150°C are feed back from the cyclonic combustion furnace 128 and used by the advanced pure pyrolysis unit 120.

Exhaust gases at approximately 700°C are ejected from the advanced pure pyrolysis unit 120 and are passed to a steam recovery boilers 152 to recover the steam which is then passed on to a steam accumulator which in turn supplies pressurised steam to the rotating treatment drum 104.

Returning to the cleaning unit 134, the gases 122 and oils 124 are used by an internal combustion engine 136 to create a power export 138 and power the parasitic load 140 of the assembly used to carry out the pyrolysis method of the present invention. The thermal power is exported 142 or used 144 in the form of heat 146 by the biomass fuel recovery and drying unit 144, or, by the steam recovery boilers 152 as described hereinbefore.

The recovered water from the cleaning unit 134 and the recovered condensate from the exhaust steam condensing system 158 is passed through a water treatment plant 148 and stored in a boiler feed tank 150 for supplying the steam recovery boilers 152.

A Steam Inlet Steam Exhaust Intermediate (SISEI) buffer vessel 156 is used to act as a buffer for the steam inlet and outlets to the rotating treatment drum 104. The buffer vessel 156 is connected to the steam inlet and outlet on the rotating treatment drum so that when the rotating treatment drum 104 is being charged with steam, the buffer vessel 156 can act as a buffer for the supply of steam. When contaminated steam is being evacuated from the rotating treatment drum 104 after waste materials have been treated, the buffer vessel 156 can act to capture any unwanted, oversized particles which are carried over within the contaminated steam evacuating from the rotating treatment drum 104. Therefore, it will not be necessary to stop the operation of the rotating treatment drum 104 and manually clean extraction outlets which may otherwise have been blocked by such unwanted, oversized particles. Instead, the rotating treatment drum 104 can be loaded with fresh waste materials and charged with steam so that it can continue to operate whilst the unwanted, oversized particles are automatically removed from the buffer vessel 156.

As mentioned above, Volatile Organic Compounds (VOCs) 130 are emitted from the rotating treatment drum 104 and are passed into the cyclonic combustion furnace 128 as secondary combustion air to be mixed with the char 126.

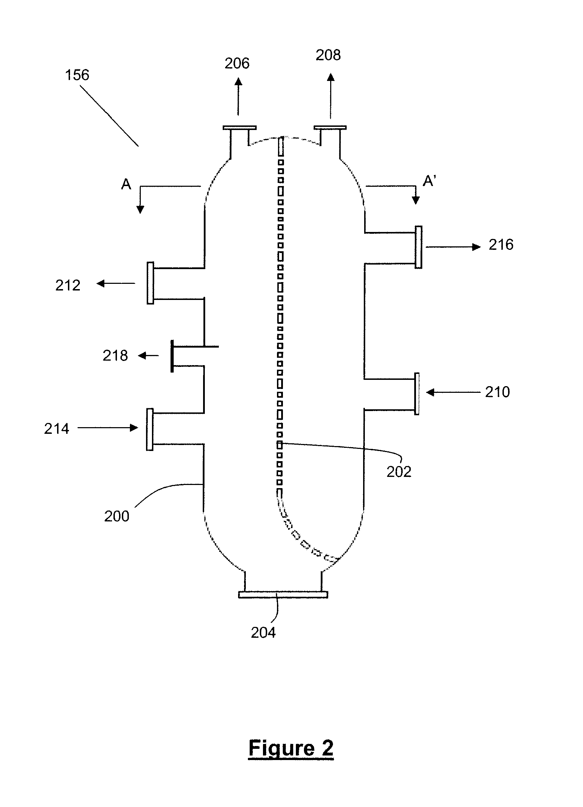

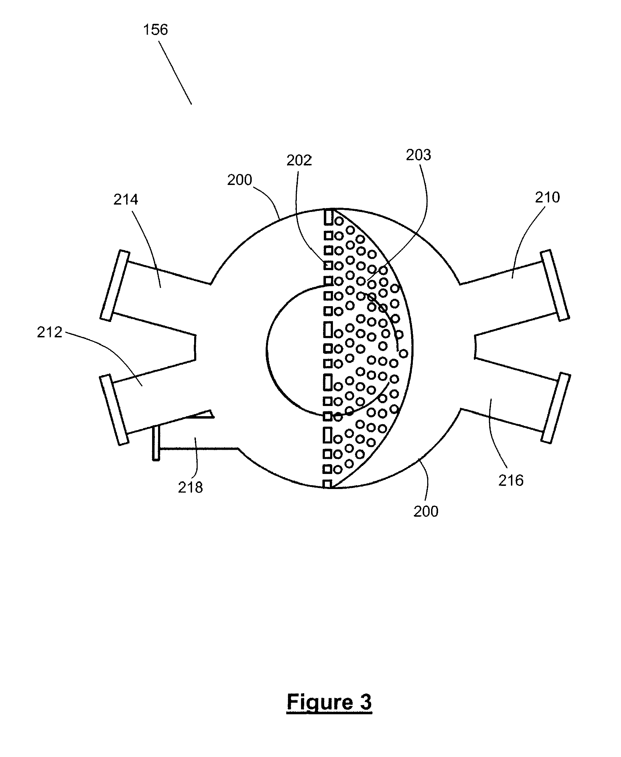

With reference to Figures 2 and 3, wherein like parts previously described have been assigned the same reference numerals, the buffer vessel 156 comprises a tubular body 200 having a cleaning port 204 located at the base and a strainer 202 arranged along a longitudinal plane inside the tubular body 200, splitting the tubular body 200 into two sections internally. The strainer 202 comprises a curved end 203 which abuts against an internal wall of buffer vessel 156 and to one side of the cleaning port 204. A dished end, opposing the cleaning port 204, terminates in a pair of ports 206, 208 which allow each of the two internal sections to be measured for differential pressure or to be de-pressurised. A clean steam inlet 210 which is connected to the steam storage system 154, a clean steam outlet 212 which is connected to the rotating drum 104, a contaminated steam inlet 214, and a contaminated steam outlet 216 are provided on the buffer vessel 156. The buffer vessel 156 is self cleaning and any heavy material is discharged automatically via the cleaning port 204 when the differential measured between ports 206 and 208 is above a predetermined level. An anti-vacuum port 218, as generally understood within the art, is provided on the buffer vessel 156.

With reference to Figure 4, wherein like parts previously described have been assigned the same reference numerals, the rotating treatment drum 104 comprises a substantially tubular body 450 having an access door 452 at one end and a dished end 460 opposing the access door 452. A helical screw 454 is provided on an inner face of the rotating treatment drum 104. There is also a plurality of automatic steam activated air vent ports 456 located at various points on the substantially tubular body 450. The rotating treatment drum 104 is preferably between 15 and 20 metres in length and has an external diameter of between 2.5 metres and 4.5 metres. The rotating drum 104 is envisaged to be mounted on a framework complete with load cells (not shown) and maintained at an angle of between 1.8 degrees and 3 degrees, with the access door 452 at the uppermost end. The steam inlet/outlet 458 is positioned at the dished end 460 by means of a rotating joint which is connected to the buffer vessel 156.

In use, the waste material is fed into the rotating treatment drum 104 until a prespecified amount of waste material is in the rotating treatment drum 104. For example, the load cells may be used to indicate when a predetermined mass of waste materials has been fed into the rotating treatment drum 104. Preferably, the optimum mass of waste materials will be in the region of 20 to 30 tonnes.

During an initial charging period, clean steam is charged into the rotating treatment drum 104 through the buffer vessel 156. The rotating treatment drum 104 will be vented of air initially, by allowing the air to pass out one of the automatic steam activated air vent ports 456. After a certain amount of air has been vented from the rotating treatment drum, the clean steam is charged into the rotating treatment drum so as to pressurise the rotating treatment drum 104 with pressurised steam. During the pressurisation stage, the rotating treatment drum 104 may be rotated during charging until an optimum pressure of between 3.5 Bar and 6 Bar is created within the rotating treatment drum 104. The rotating treatment drum 104 is then rotated for a further 10 to 40 minutes to treat the waste materials, and in particular, condition the biomass for the pyrolysis process. The biomass items are preferably reduced to below 20mm in size. One of the ports on the buffer vessel 156 is then opened to allow the rotating treatment drum 104 to depressurise. The contaminated steam is evacuated from the rotating treatment drum 104 through the contaminated steam outlet 216 on the buffer vessel 156 and may be cascaded into a second rotating treatment drum (not shown) for re-use. Any remaining contaminated steam may be condensed and a vacuum pump may be used to create a vacuum to completely excavate the rotating treatment drum 104 of steam.

Once the rotating drum 104 has been completely depressurised, the access door, further described hereinbelow with respect to Figure 5, will be opened and the remaining conditioned materials will be discharged onto a conveyor by rotating the rotating drum in a clockwise direction for further processing in the pyrolysis method as described hereinbefore with reference to Figure 1.

Referring to Figure 5, wherein like parts previously described have been assigned the same reference numerals, the access door 452 comprises a substantially circular door body 402 having recess with O-ring seals 406, 408. The substantially circular door body 402 mates with a complementary circular ope indicated generally by reference numeral 400 at one end of the rotating treatment drum 104. The ope 400 is defined by a circular flanged lip 404 which interlocks with the recesses comprising the O-rings 406, 408 on the door body 402.

Semi-circular collars 410, 412 which may form an O-shaped ring when rotated into a locked position keep the access door 452 in a closed and locked state. An instrument protection dome 414 is positioned to prevent material blocking the door pressure gauge 420 and the locking collars engage pin 418. A dome opening rod 416 is mounted on the door body 402 to automatically open the dome when the door removal arm is engaged and allow the rotating drum pressure to be measured by the pressure gauge 420 and the pin 418. The semi-circular locking collars engage pin 418 is arranged on the door body 402. The semi-circular locking collars engage pin 418 is spring biased to move to an unlocking position only when the pressure within the rotating treatment drum 104 is substantially equal to the pressure external the rotating treatment drum 104. The engage pin 418 is mechanically connected to a locking collar drive motor gearbox and will prevent the locking collar drive engaging if the pin is not in the unlocking position. A rotating treatment drum pressure gauge 422 is also mounted on the door body 402 along with a wireless pressure transmitter which provides an electrical interlock to prevent door opening in the event of pressure within the rotating drum 104.

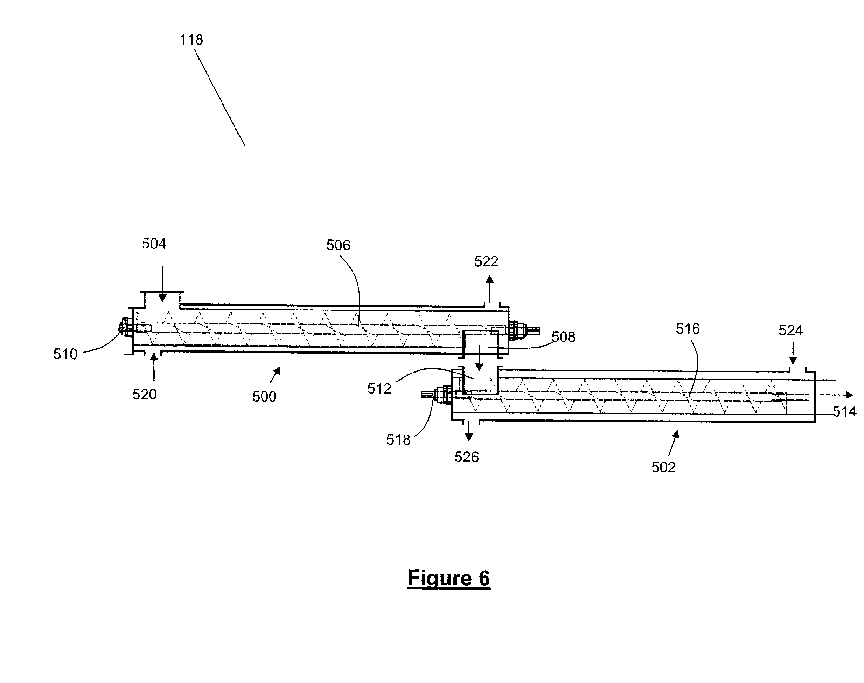

With reference to Figure 6, wherein like parts previously described have been assigned the same reference numerals, the two-stage compression screw system 118 is shown to comprise a primary auger assembly indicated generally by reference numeral 500 and a secondary auger assembly indicated generally by reference numeral 502.

The primary auger assembly 500 comprises a dry biomass inlet 504. The auger screw 506 is driven by a motor 510 and discharges the compressed dry biomass out the discharge outlet 508. Heated water is passed into a water jacket surrounding the primary auger assembly 500 through a heated water inlet 520, and, the heated water is discharged from the water jacket through a heated water outlet 522.

The dry biomass is then passed into the secondary auger assembly 502 through the inlet 512.

The secondary auger assembly 502 comprises a motor 518 driving the auger screw 516. Dry biomass is feed out of the discharge outlet 514 and passed into the advanced pure pyrolysis unit. Cold water is passed through a water jacket surrounding the secondary auger assembly 502 by passing the cold water into the water jacket through a cold water inlet 524 and discharging the cold water out from the cold water outlet 526. This two-stage, temperature-controlled, compression screw system 118 has proven to be more effective in providing substantially oxygen-free biomass of a consistent calorific content to the advanced pure pyrolysis unit.

The terms "comprise" and "include", and any variations thereof required for grammatical reasons, are to be considered as interchangeable and accorded the widest possible interpretation.

It will be understood that the components shown in any of the drawings are not necessarily drawn to scale, and, like parts shown in several drawings are designated the same reference numerals.

The invention is not limited to the embodiments hereinbefore described which may be varied in both construction and detail.

## Claims

1. A pyrolysis assembly comprising a pre-pyrolysis treatment plant, a pyrolysis plant, a fuel-based energy plant, and, a recycling plant;
wherein,
the pyrolysis assembly is fed waste materials having at least 30% biomass by weight, and the pre-pyrolysis treatment plant separates the biomass from the waste materials and conditions the separated biomass for the pyrolysis plant;
the conditioned biomass is fed to the pyrolysis plant, and, the pyrolysis plant causes the conditioned biomass to crack into at least a char and a gas;
the char and gas are passed into the fuel-based energy plant where the char and gas are used as fuels to harness energy from the char and gas; the harnessed energy is used to operate the pyrolysis assembly and excess energy is exported; and,
by-products from the fuel-based energy plant and the pyrolysis plant are recovered for re-use by the recycling plant;
**characterised in that**,
the pre-pyrolysis treatment plant comprises a rotating treatment drum and a buffer vessel connected to the rotating treatment drum, such that, steam charged into the rotating treatment drum and evacuated from the drum is passed through the buffer vessel.

2. A pyrolysis assembly as claimed in any of claim 1, wherein, the buffer vessel comprises a strainer within the buffer vessel.

3. A pyrolysis assembly as claimed in claims 1 or 2, wherein, the rotating treatment drum comprises an access door having a safety mechanism to prevent the access door being opened whilst the rotating treatment drum is pressurised above standard room-pressure.

4. A pyrolysis assembly as claimed in claim 3, wherein, the safety mechanism comprises an electrical interlocking mechanism to compare the pressure inside the rotating treatment drum to the pressure external the rotating treatment drum so as prevent the access door being opened whilst the rotating treatment drum is pressurised above standard room-pressure.

5. A pyrolysis assembly as claimed in claim 3, wherein, the safety mechanism comprises a mechanical interlocking mechanism having a spring loaded locking pin which is spring biased to move to an unlocking position when the pressure inside the rotating treatment drum is substantially equal to the pressure external the rotating treatment drum.

6. A pyrolysis assembly as claimed in any preceding claims, wherein, the pre-pyrolysis treatment plant comprises a two-stage compression screw to compress and dry the biomass for feeding to the pyrolysis plant.

7. A method of harnessing energy from waste materials using a pyrolysis assembly, whereby the pyrolysis assembly comprises a pre-pyrolysis treatment plant, a pyrolysis plant, and, a fuel-based energy plant; the method comprising the steps of:
i) feeding waste materials having at least 30% biomass by weight into the pre-pyrolysis treatment plant;
ii) separating the biomass from the waste materials in the pre-pyrolysis treatment plant;
iii) chemically cracking the biomass into at least a char and a gas in the pyrolysis plant;
iv) harnessing energy from the char and gas in the fuel-based energy plant;
**characterised in that**, the step of separating the biomass from the waste materials in the pre-pyrolysis treatment plant comprises feeding the waste materials into a rotating treatment drum to separate the biomass from the waste materials; with a buffer vessel being connected to the rotating treatment drum, such that, steam charged into the rotating treatment drum and evacuated from the drum is passed through the buffer vessel.

8. A method of harnessing energy from waste materials using a pyrolysis assembly as claimed in claim 7, the method further comprising the step of conditioning the separated biomass for the pyrolysis plant prior to feeding the conditioned biomass into the pyrolysis plant to be chemically cracked.

9. A method of harnessing energy from waste materials using a pyrolysis assembly as claimed in claims 7 or 8, the method further comprising the step of using the harnessed energy to operate the pyrolysis assembly and exporting excess energy

10. A method of harnessing energy from waste materials using a pyrolysis assembly as claimed in any of claims 7 to 9, the method further comprising the step of recovering by-products from the fuel-based energy plant and the pyrolysis plant for re-use by a recycling plant which forms part of the pyrolysis assembly.

11. A buffer vessel suitable for connection to a rotating treatment drum, with the buffer vessel and rotating treatment drum forming part of a pre-pyrolysis treatment plant in a pyrolysis assembly;
the pre-pyrolysis treatment plant being used to separate biomass from waste materials having at least 30% biomass by weight; whereby, biomass is separated from the waste materials in the rotating treatment drum by pressurising the rotating treatment drum with steam prior to rotating the waste materials for a predetermined period of time;
**characterised in that**,
steam charged into the rotating treatment drum and evacuated from the drum is passed through the buffer vessel.

12. A buffer vessel suitable, as claimed in claim 11, whereby, the buffer vessel comprises a clean steam inlet to receive clean steam from a steam source and a clean steam outlet connected to the rotating treatment drum so as to charge the rotating treatment drum with steam; and,
the buffer vessel also comprises a contaminated steam inlet connected to the rotating treatment drum so as to evacuate steam from the drum and a contaminated steam outlet is discharge contaminated steam from the buffer vessel.

13. A buffer vessel suitable, as claimed in claim 12, whereby, the buffer vessel comprises a cleaning port at one end of the vessel to allow access to an interior of the buffer vessel for cleaning of contaminants out of the vessel; and,
the buffer vessel comprises a strainer within the buffer vessel with the strainer dividing the clean steam inlet and the contaminated steam outlet from the clean steam outlet and the contaminated steam inlet.

14. A rotating treatment drum suitable for use in a pre-pyrolysis treatment unit, the rotating treatment drum comprising an access door having a safety mechanism to prevent the access door being opened whilst the rotating treatment drum is pressurised above standard room-pressure.

15. A rotating treatment drum as claimed in claim 14, wherein, the safety mechanism comprises an interlocking mechanism to compare the pressure inside the rotating treatment drum to the pressure external the rotating treatment drum so as prevent the access door being opened whilst the rotating treatment drum is pressurised above standard room-pressure.
